# EUROPEAN PATENT APPLICATION

(11) **EP 1 814 249 A2**
(43) Date of publication of application: **01.08.2007**
(21) Application number: 07250247.9
(22) Date of filing: 22.01.2007
(51) Int. Cl.: H04H 1/00

(54) **Broadcast station selection method by language of program audio and electronic equipment including the same**

(30) Priority: 27.01.2006 JP 2006019280
(71) Applicant: ORION ELECTRIC CO., Ltd., Fukui 915-8555 (JP)
(72) Inventor: Sakon, Toshihiro c/o Intellectual Property Dept., Echizen-city Fukui 915-8555 (JP)
(74) Representative: Paget, Hugh Charles Edward

(57) **Abstract**

To select broadcast stations for broadcasting in a language desired for viewing by a user as a list out of the broadcast stations for broadcasting with multiple audios. A channel scan is performed to airwaves over the entire frequency band, language information codes included in the airwaves transmitted from the broadcast stations are identified and stored by a microcontroller 4, and the broadcast stations are classified by the language information code and displayed as a list so as to easily grasp the broadcast stations for broadcasting in the language desired for viewing by the user.

## Description

### BACKGROUND OF THE INVENTION

### Field of the Invention

The present invention relates to a broadcast station selection method by an output language of a program audio whereby, on a device for receiving a digital broadcast and reproducing a broadcast program, broadcast stations for broadcasting programs in a language desired by a user can be selected out of the broadcast stations for broadcasting programs capable of reproducing multiple output audios so as to list and display them and a device including the method.

### Description of the Related Art

In recent years, usage of electronic equipments such as a television set capable of receiving digital broadcasting is rapidly expanding toward the nationwide start of digital broadcasting in 2011. The digital broadcasting allows various kinds of information and audio data in various languages to be provided other than conventional video, main audio and sub-audio of a broadcast program. Various methods for improving convenience for a user are disclosed based on such various kinds of information.

For instance, Japanese Patent Laid-Open Publication No. 2004-362280 (Patent Document 1) discloses a broadcast program storage device for rendering the audio sounded from a program on the air as text, registering it with a database as a keyword and searching the database by an input of the audio or the text by the user so as to notify the user as audio or character information.

Japanese Patent Laid-Open Publication No. 2003-504984 (Patent Document 2) discloses a system using a television program guide which can broadcast a broadcast program having multiple audios with the audio in a language preset by the user.

According to the method of Patent Document 1, however, it is possible to search a title or the contents of the program. Nevertheless, there is no disclosed method by which the user can select the audio in the case of the broadcast of one broadcast program having multiple audios. According to Patent Document 2, it is possible to view the broadcast program in a state of selecting the audio in a setup language per preset language when viewing the broadcast program having multiple audios. To grasp the broadcast station performing the broadcast in the language desired for viewing by the user, it is necessary to check it by changing channels one by one.

### SUMMARY OF THE INVENTION

The present invention has been made in view of the problem, and provides the broadcast station selection method by an output language of a program audio whereby the user can easily select the broadcast station in the language desired for viewing by the user by selecting and listing the broadcast stations by a program audio language.

A broadcast station selection method by a language of a program audio according to a first aspect is the one for an electronic equipment comprising: tuning means capable of receiving digital television airwaves which are transmitted in a data structure allowed to have multiple pieces of audio data and including a language information code indicating language information corresponding to the multiple pieces of audio data; audio/video output means for outputting an audio/video signal received by the tuning means to a display or an external display device; and control means for controlling the device,
characterized in that: a channel scan is performed by the tuning means; and on receiving an effective broadcast, the control means stores the language information code included in the effective broadcast and classifies and lists broadcast stations by the language information code to output the list by the audio/video output means after finishing the channel scan for entire receivable frequencies.

According to the configuration of the first aspect, it is possible to store the language information code indicating what language is the audio of a broadcast program included in airwaves of each individual received broadcast as to the airwaves transmitted in a data structure capable of having multiple pieces of audio data so as to classify all the received broadcast stations by the language information code, that is, by the language of audio and display a list thereof.

The broadcast station selection method by a language of a program audio according to a second aspect is the one according to aspect 1, characterized in that: the data structure is a Transport Stream format; and the language information code uses an IS0639-language_code which is one of multiple pieces of information on elements set up in an SLD (Service Location Descriptor) of an EIT (Event Information Table) included in a PSIP (Program Specific Information Protocol) of the Transport Stream format.

According to the configuration of the second aspect, it is possible, by using the Transport Stream format which is the data structure of existing digital broadcasting, to identify what kind of language is used for the multiple audios of the broadcast program by the IS0639_language_code of this format indicating each individual language of the multiple audios included in the airwaves superimposing one broadcast program.

Electronic equipment comprising the broadcast station selection method by a language of a program audio according to a third aspect is the one comprising the broadcast station selection method by a language of a program audio according to aspect 1 or 2, characterized in that: the broadcast stations are selected from the digital television airwaves by a preset or user-selected language information code; and a list of the selected broadcast stations is displayed by a predetermined operation.

According to the configuration of the third aspect, it is possible to select only the broadcast stations of a relevant language information code out of the broadcast stations classified by the language information code by the language information code preset or selected by the user so as to display the list thereof.

The electronic equipment comprising the broadcast station selection method by a language of a program audio according to a fourth aspect is the one comprising the broadcast station selection method by a language of a program audio according to aspect 3, characterized by further comprising: by-language broadcast station display switching means for displaying a list of the broadcast stations classified by the language information code on the audio/video output means by switching them by the language information code.

According to the configuration of the fourth aspect, when displaying the list of the broadcast stations classified by the language information code on a display, a display device or the like, it is possible to display it by the language information code and further display the list of the broadcast stations classified by another language information code by switching the list of the broadcast stations during display.

The electronic equipment comprising the broadcast station selection method by a language of a program audio according to a fifth aspect is the one comprising the broadcast station selection method by a language of a program audio according to aspect 3 or 4, characterized by further comprising: broadcast station list sorting means for counting and storing utilization time and utilization frequency of programs viewed by a user in a predetermined period by the language information code so as to sort the list according to frequency of usage.

According to the configuration of the fifth aspect, when using the electronic equipment, it is possible to record what language is the audio of the program viewed by the user, viewing time, viewing frequency and the like thereof by the language information code so as to sort the list in lowering order of frequency of usage of the language information code and set up display order of the list by the by-language broadcast station display switching means.

A broadcast station selection method by a language of a program audio according to the first aspect is the one for an electronic equipment comprising: tuning means capable of receiving digital television airwaves which are transmitted in a data structure allowed to have multiple pieces of audio data and including a language information code indicating language information corresponding to the multiple pieces of audio data; audio/video output means for outputting an audio/video signal received by the tuning means to a display or an external display device; and control means for controlling the device,
characterized in that: a channel scan is performed by the tuning means; and on receiving an effective broadcast, the control means stores the language information code included in the effective broadcast and classifies and lists broadcast stations by the language information code to output the list by the audio/video output means after finishing the channel scan for entire receivable frequencies. Therefore, it is possible to classify the broadcast stations for broadcasting in multiple languages such as a bilingual broadcast by the language of the audio so that the user can easily identify the broadcast in a desired language such as his or her familiar language.

The broadcast station selection method by a language of a program audio according to the second aspect is the one by a language of a program audio according to aspect 1, characterized in that: the data structure is a Transport Stream format; and the language information code uses an IS0639_language_code which is one of multiple pieces of information on elements set up in an SLD (Service Location Descriptor) of an EIT (Event Information Table) included in a PSIP (Program Specific Information Protocol) of the Transport Stream format. Therefore, it is possible to classify the broadcast stations by the language of the program audio by using an existing data structure.

Electronic equipment comprising the broadcast station selection method by a language of a program audio according to the third aspect is the one comprising the broadcast station selection method by a language of a program audio according to aspect 1 or 2, characterized in that: the broadcast stations are selected from the digital television airwaves by a preset or user-selected language information code; and a list of the selected broadcast stations is displayed by a predetermined operation. Therefore, only the broadcast stations broadcasting the programs in the language desired for viewing by the user are selected and displayed so that the user can easily select a desired broadcast station and view the program.

The electronic equipment comprising the broadcast station selection method by a language of a program audio according to the fourth aspect is the one comprising the broadcast station selection method by a language of a program audio according to aspect 3, further comprising: by-language broadcast station display switching means for displaying a list of the broadcast stations classified by the language information code on the audio/video output means by switching them by the language information code. Therefore, it is possible to easily browse the list of the broadcast stations of other language information codes from the list of the broadcast stations of the language information code initially displayed.

The electronic equipment comprising the broadcast station selection method by a language of a program audio according to the fifth aspect is the one comprising the broadcast station selection method by a language of a program audio according to aspect 3 or 4, further comprising: broadcast station list sorting means for counting and storing utilization time and utilization frequency of programs viewed by a user in a predetermined period by the language information code so as to sort the list according to frequency of usage. Therefore, the lists of the broadcast stations by the language information code are displayed in lowering order of viewing frequency of the language so that the user can promptly select the broadcast stations for broadcasting in a desired language.

### BRIEF DESCRIPTION OF THE DRAWINGS

FIG. 1 is a block diagram showing a configuration of a digital television set, which shows an embodiment of the present invention;
FIG. 2 is an explanatory diagram showing a data structure of airwaves received by the digital television set, which shows the embodiment of the present invention;
FIG. 3 is an explanatory diagram showing the structure of an SLD as a part of the data structure of the airwaves, which shows the embodiment of the present invention;
FIG. 4 is an explanatory diagram showing a concept of a language information code set up in the SLD, which shows the embodiment of the present invention;
FIG. 5 is a flowchart showing operation of the digital television set for creating a by-language broadcast station list of broadcast stations, which shows the embodiment of the present invention;
FIG. 6 is an explanatory diagram showing a language setup screen, which shows the embodiment of the present invention;
FIG. 7 is an explanatory diagram showing a by-language list creation instruction screen, which shows the embodiment of the present invention;
FIG. 8 is a table showing examples of languages used by each individual broadcast station, which shows the embodiment of the present invention;
FIG. 9 is a table having the broadcast stations shown in FIG. 8 classified by the language used, which shows the embodiment of the present invention; and
FIG. 10 is an explanatory diagram showing display transition of the by-language broadcast station list classified by FIG. 9, which shows the embodiment of the present invention.

### DETAILED DESCRIPTION OF THE PREFERRED EMBODIMENTS

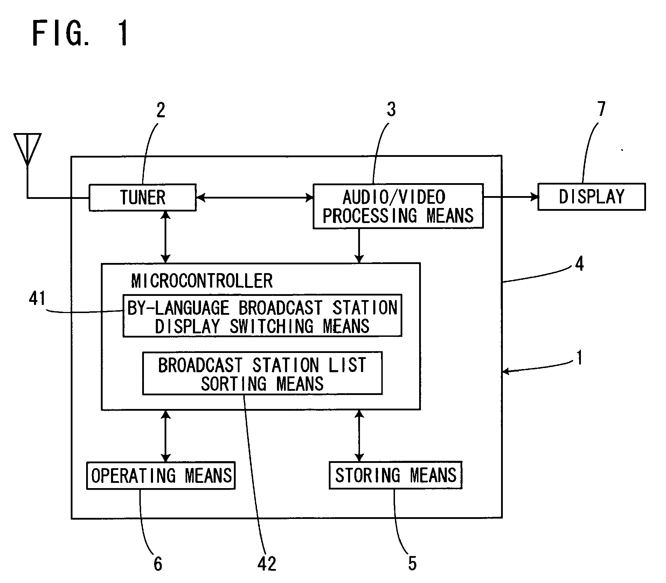

Hereunder, an embodiment as a preferred embodiment of the present invention will be described with reference to FIGS. 1 to 7. As a matter of course, the present invention is easily applicable to those other than what is described in the embodiment without departing from the scope of the invention, which is self-explanatory.

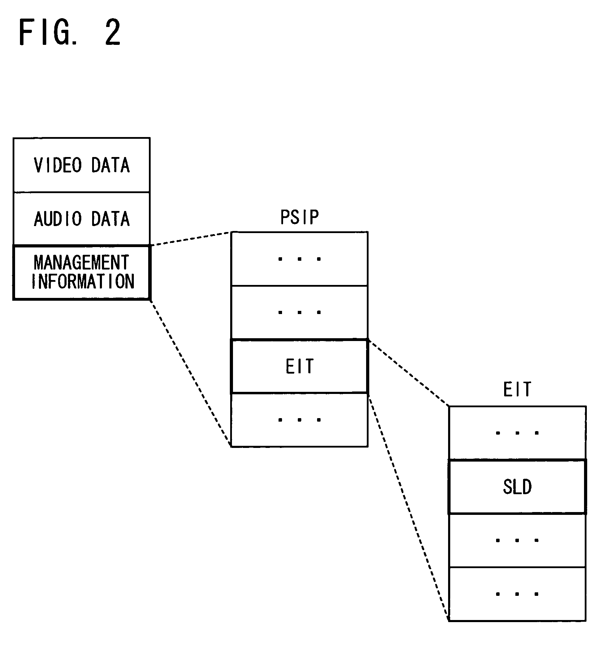

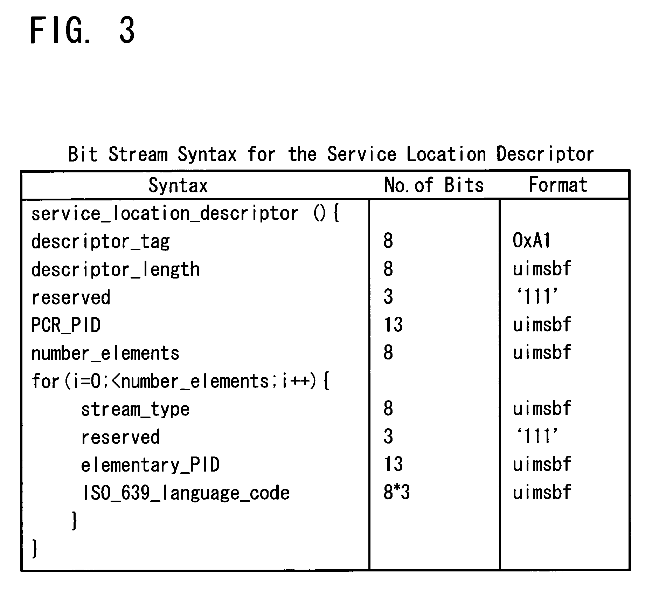

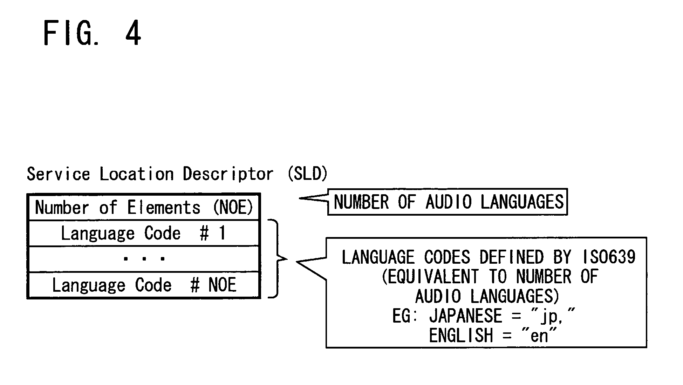

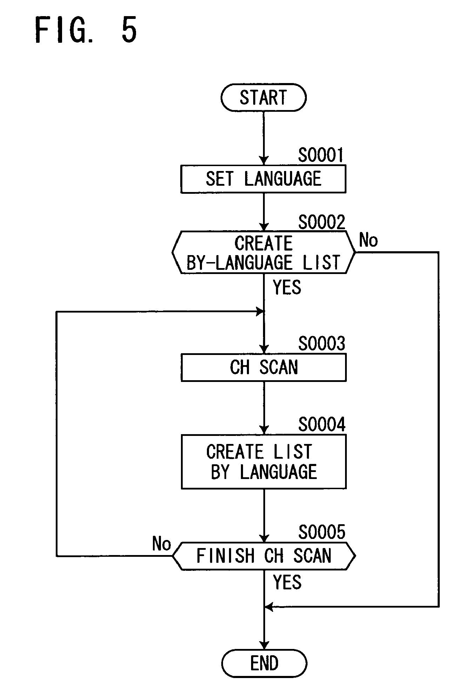

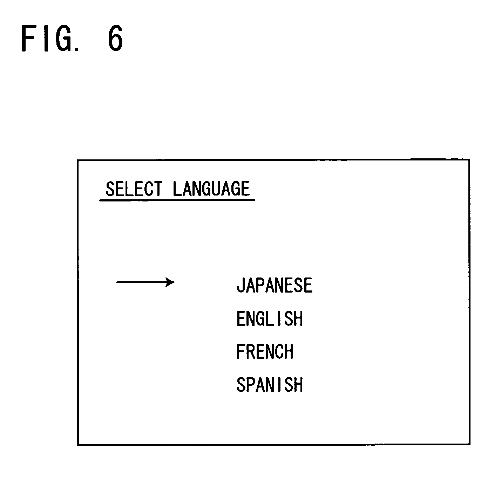

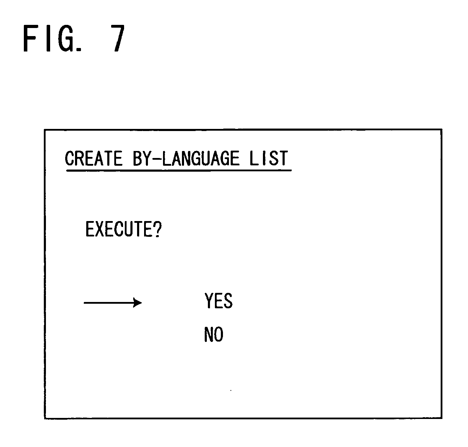

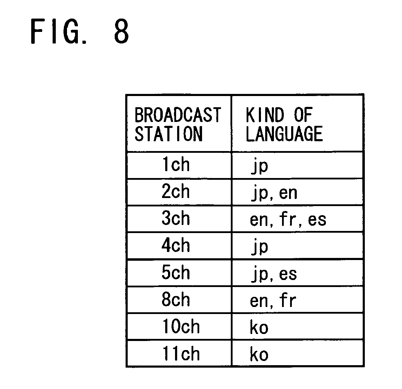

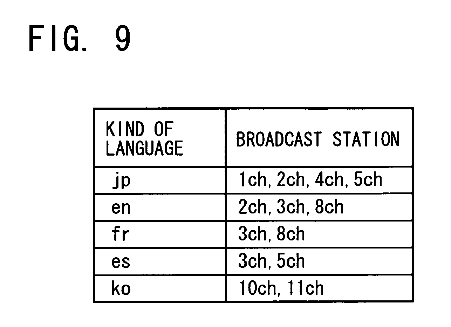

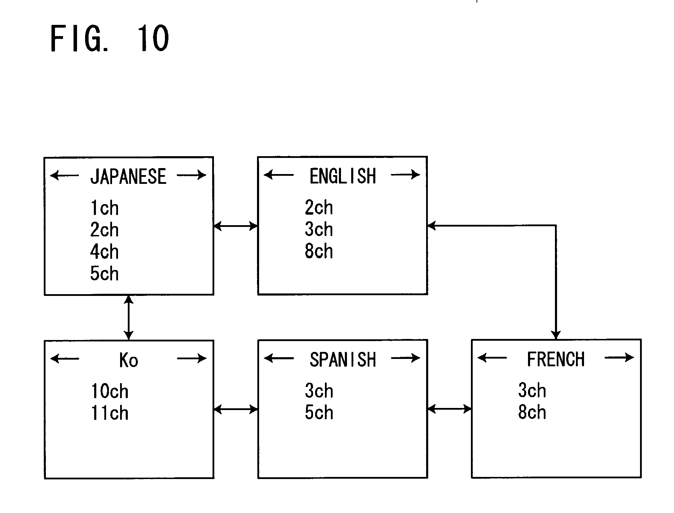

FIGS. 1 to 10 show an embodiment of the present invention. FIG. 1 is a block diagram showing a configuration of a digital television set which is an electronic equipment including a broadcast station selection method by a language of a program audio. FIG. 2 is an explanatory diagram showing a data structure of a Transport Stream format which is a data format of airwaves. FIG. 3 is an explanatory diagram showing a syntax of an SLD included in an EIT. FIG. 4 is an explanatory diagram showing a concept of a setup structure of a language information code in the SLD. FIG. 5 is a flowchart showing operation of the electronic equipment including the broadcast station selection method by a language of a program audio. FIG. 6 is an explanatory diagram showing a language selection screen on which a user selects a desired language for viewing. FIG. 7 is an explanatory diagram showing a by-language list creation screen for selecting whether or not to create a by-language broadcast station list after the user finishes selecting a desired language for viewing. FIG. 8 is a table showing a list of languages used as an audio of a broadcast program by each individual broadcast station which is receivable. FIG. 9 is a table having the list of languages of each individual broadcast station shown in the table of FIG. 8 classified by the language. FIG. 10 is an explanatory diagram showing an example of screen transition of the by-language broadcast station list displayed on selecting a broadcast station by a language of a program audio.

A description will be given based on FIG. 1 as to the configuration of the digital television set which is an electronic equipment including a broadcast station selection method by a language of a program audio. Reference numeral 1 denotes a digital television set. Reference numeral 2 denotes a tuner as tuning means by which the digital television set 1 receives the airwaves and renders them as an audio/video signal. Reference numeral 3 denotes audio/video processing means for displaying and reproducing the audio/video signal received by the tuner 2. Reference numeral 4 denotes a microcontroller as control means for controlling the operation of the digital television set 1 and managing creation of the by-language broadcast station list and viewing frequency of the program audio by the language. Reference numeral 41 denotes by-language broadcast station display switching means for displaying the by-language broadcast station list created by the microcontroller 4 by switching it by the language. Reference numeral 42 denotes broadcast station list sorting means for sorting the by-language broadcast station list created by the microcontroller 4. Reference numeral 5 denotes storing means for storing the viewing frequency by the language managed by the microcontroller 4 and a language name corresponding to the language information code described later. Reference numeral 6 denotes operating means for the user to operate the digital television set 1. Reference numeral 7 denotes a display for displaying and reproducing a video and an audio outputted from the audio/video processing means.

Next, a description will be given based on FIGS. 2 to 4 as to the data structure of the airwaves for performing the broadcast station selection method by a language of a program audio according to this embodiment. FIG. 2 is an explanatory diagram showing an overview of the Transport Stream format which is a data structure format of airwaves. As shown in FIG. 2, the airwaves are transmitted while including a video data portion having a video part of the broadcast program, an audio data portion having multiple audio streams of the broadcast program and a management information portion having various kinds of additional information such as starting time and ending time of the broadcast program. The management information portion has a program specification information called a PSIP (Program Specific Information Protocol) defined therein, and the PSIP further has information called an EIT (Event Information Table) defined thereon. The EIT includes information called an SLD (Service Location Descriptor) in which the information indicating the data structure of the audio data portion is described.

FIG. 3 is an explanatory diagram showing the data structure of the aforementioned SLD. In FIG. 3, number_elements indicates the number of audio streams included in the audio data portion, which is used as a loop condition of a FOR loop subsequently described. The FOR loop in FIG. 3 has the information on the audio of the broadcast program included in the audio data portion defined by the audio stream therein. Language information on the audio stream is set up by an IS0639_language_code which is defined by the FOR loop. It represents what language each individual audio stream included in the audio data portion is in by the language information code (Japanese is jp, and English is en for instance) defined by the IS0639. FIG. 4 is an explanatory diagram conceptually showing the data structure of the aforementioned number_elements and ISO639_language_code. The number of the audio streams included in the audio data portion is defined by number_elements, and there are as many IS0639_language_code's in series as the number of the audio streams below. To be more specific, in the case where the audio data portion includes three kinds of audio streams of Japanese, English and French, number_elements is 3 while "jp," "en" and "fr" are set as the respective language information codes.

Next, a description will be given based on FIG. 5 as to the operation of the digital television set which is the electronic equipment including the broadcast station selection method by a language of a program audio. The language information code is set by the user on power-on or from a language information code setup screen (S0001). Subsequently, the user selects whether or not to create a by-language broadcast station list of receivable broadcast stations (S0002). In the case where the user creates the by-language broadcast station list, a channel scan is performed to the entire frequency band (S0003), and it is identified by IS0639 language code as the aforementioned language information code what kind of language the broadcast programs of the receivable broadcast stations are broadcasted in so as to create the by-language broadcast station list which classifies the broadcast stations by the language (S0004). This is continued until finishing the channel scan of the entire frequency band (S0005). If the channel scan is finished, it returns to a normal state of use.

Subsequently, a description will be given based on FIG. 6 as to the language selection screen on performing the broadcast station selection method by a language of a program audio. FIG. 6 is an explanatory diagram showing the language selection screen. This screen is displayed by turning on the power of the digital television set or by having it selected by the user from a menu screen or the like, where a desired language name can be selected and stored on the digital television set by moving a cursor and confirming it with the operating means 6.

Next, a description will be given based on FIG. 7 as to a by-language list creation instruction screen for providing an instruction to create the by-language broadcast station list of the broadcast stations by the broadcast station selection method by a language of a program audio of this embodiment. On the by-language list creation instruction screen, YES is selected and confirmed so as to create the by-language broadcast station list as shown in the steps 0003 to 0005 of FIG. 5.

Next, a description will be given based on FIGS. 8 to 10 as to a method of displaying the created by-language broadcast station list. For instance, it is assumed that the broadcast stations receivable at a certain location are broadcasting in the languages shown in FIG. 8. In the digital television set 1 of this embodiment, the microcontroller 4 classifies the airwaves transmitted from the broadcast stations into the broadcast stations by the language as shown in FIG. 9 as the by-language broadcast station list based on the flowchart of FIG. 5. To have it checked by the user, the language name corresponding to ISO639_language_code indicating each of the languages is read from the storing means 5 so as to display the language name and the list of the broadcast stations for broadcasting in the language on the display 7 as shown in FIG. 10. In this case, IS0639_language_code is converted to the language name and displayed. In the case where the language name corresponding to the code cannot be read from the storing means 5, however, the code itself is displayed. For instance, in the case where "Korean" indicating the language name corresponding to Ko does not exist in the storing means 5, the display is performed by the code as with Ko in FIG. 10. As for the broadcast station list, the user can switch the displayed broadcast station list by operating the by-language broadcast station display switching means 41 with the operating means 6 to simply check the broadcast station for broadcasting in the desired language. The user can also manage by-language viewing frequency of the audio in ordinary use, store it in the storing means 5 and perform sorting by the broadcast station list sorting means 42 so as to sort order of the languages of the displayed broadcast station list to be in order of the viewing frequency. For instance, the by-language broadcast station list is switched in order of Japanese, English, French, Spanish and Korean in FIG. 10. In the case where the viewing time of the broadcast programs viewed by the user in a certain period is occupied by English, Japanese, Spanish, French and Korean in lowering order of ratio, the display order of the broadcast station list can be sorted in this order and displayed.

The digital television set 1 of this embodiment configured as above can perform a channel scan over the languages used for the audios of the broadcast programs by each of the receivable broadcast stations over the entire frequency band. It classifies the broadcast stations by IS0639_language_code as the language information code and displays the list of the broadcast stations in the language set up on power-on or in arbitrary timing by the user. Thus, the user can easily check the broadcast station for broadcasting in the language desired for viewing so that convenience is improved. As it includes the by-language broadcast station display switching means 41, it is possible to switch to the list of the broadcast stations for broadcasting in another language and check the broadcast stations broadcasting in the language. The user can easily check the broadcast stations for broadcasting in the language desired for viewing by the user by means of the broadcast station list sorting means 42 for sorting the display order of the broadcast station list according to the viewing frequency of the user.

The embodiment of the present invention was described in detail above. However, the present invention is not limited to the embodiment but various deformed embodiments are possible within the scope of the present invention. For instance, while the electronic equipment was defined as the digital television set 1, it may be any electronic equipment including a tuner function and an audio/video output function. The microcontroller 4 included the by-language broadcast station display switching means 41 and the broadcast station list sorting means 42, which was described as one microcontroller. However, it is not limited thereto but the microcontroller 4 may also be mounted as multiple microcontrollers.

## Claims

1. A broadcast station selection method by a language of a program audio for an electronic equipment comprising:
tuning means capable of receiving digital television airwaves which are transmitted in a data structure allowed to have multiple pieces of audio data and including a language information code indicating language information corresponding to the multiple pieces of audio data;
audio/video output means for outputting an audio/video signal received by the tuning means to a display or an external display device; and
control means for controlling the device, **characterized in that**:
a channel scan is performed by the tuning means; and
on receiving an effective broadcast, the control means stores the language information code included in the effective broadcast and classifies and lists broadcast stations by the language information code to output the list by the audio/video output means after finishing the channel scan for entire receivable frequencies.

2. The broadcast station selection method by a language of a program audio according to claim 1, **characterized in that**:
the data structure is a Transport Stream format; and
the language information code uses an ISO639_language_code which is one of multiple pieces of information on elements set up in an SLD (Service Location Descriptor) of an EIT (Event Information Table) included in a PSIP (Program Specific Information Protocol) of the Transport Stream format.

3. An electronic equipment comprising the broadcast station selection method by a language of a program audio according to claim 1 or 2, **characterized in that**:
the broadcast stations are selected from the digital television airwaves by a preset or user-selected language information code; and
a list of the selected broadcast stations is displayed by a predetermined operation.

4. The electronic equipment comprising the broadcast station selection method by a language of a program audio according to claim 3, **characterized by** further comprising:
by-language broadcast station display switching means for displaying a list of the broadcast stations classified by the language information code on the audio/video output means by switching them by the language information code.

5. The electronic equipment comprising the broadcast station selection method by a language of a program audio according to claim 3 or 4, **characterized by** further comprising:
broadcast station list sorting means for counting and storing utilization time and utilization frequency of programs viewed by a user in a predetermined period by the language information code so as to sort the list according to frequency of usage.
